# EUROPEAN PATENT SPECIFICATION

(11) **EP 1 291 269 B1**
(45) Date of publication and mention of the grant of the patent: **02.02.2005**
(21) Application number: 01931707.2
(22) Date of filing: 14.05.2001
(51) Int. Cl.: B62D 53/08

(54) **SAFETY DEVICE FOR ARTICULATED SEMI-TRAILERS**
SICHERHEITSEINRICHTUNG FÜR EINEN SATTELZUG
DISPOSITIF DE SECURITE POUR SEMI-REMORQUES ARTICULES

(30) Priority: 16.05.2000 ES 200001223; 08.11.2000 ES 200002699
(43) Date of publication of application: 12.03.2003
(73) Proprietor: Anton Monto, S.L., 48340 Amorebieta (Vizcaya) (ES)
(72) Inventor: MARCOS LOPEZ, Antonio, E-48340 Amorebieta (Vizcaya) (ES)
(74) Representative: Schäfer, Matthias W., Dipl.-Ing.
(86) International application number: PCT/ES2001/000186
(87) International publication number: WO 2001/087692

(56) References cited:
- US-A- 2 709 088
- US-A- 2 773 702
- US-A- 3 807 764
- US-A- 3 850 449
- US-A- 3 972 542

## Description

The present descriptive memory refers, as its title indicates, to a safety device for articulated semi-trailers such as those used in industrial vehicles to prevent the towing vehicle and its attached semi-trailer from folding against each other, commonly known as "jackknifing".

Currently, many different types of safety or "anti-jackknifing" devices are widely known. Most of them are integrated into the rotational point called the fifth wheel, which joins the towing vehicle with the semi-trailer, as can be seen in the document US 3 850 449 A, which discloses all features of the preamble of claim 1. This device consists in a fluid cylinder and piston assembly connected to the vehicle brake system.

Other of those devices, protected by the document US2773702A, consists of a valve installed in the aforementioned fifth wheel, so that when the wheel acts on the valve, it triggers the vehicle's brakes.

It is also very common a mechanism, as the protected by the document US3972542A, consisting in a manually extending part that blocks the rotation introducing in the V-slot of the fifth wheel.

All this kind of devices have the same disadvantage, that is, most of them are mounted onto or installed in the fifth wheel, which means that any unexpected failure of its automatic parts would leave the towing vehicle at the mercy of the trailer's momentum, which in most cases results in serious accidents.

The US3807764A document uses a rotational arm, connected with the vehicle braking system, that has a link connecting the arm with a point in the trailer.

Also the US2709088A document is very similar to the aforementioned US3850449A one, except in which are not mounted in the fifth wheel.

To solve the problems affecting this sector, the safety device for articulated semi-trailers which is the subject of the present invention has been developed. It is situated on the chassis of the towing vehicle, whilst the end of its telescopic arm is attached to the front of the semi-trailer.

On (top of) the platform there is a plate that rotates both ways and has a transversal bar fixed onto it that can swing on its supporting and rotational point. At both ends of this bar there is a heavy spring that absorbs the vibrations generated by the towing vehicle and the semi-trailer. One end of the bar can be extended and has the hitching component in which the articulated semi-trailer's axis is housed. The aforementioned extensible bar extends in accordance with the maneuvers carried out by the vehicle.

The circular plate may have a slot that extends from its edge to its center. A part called a safety latch slides along this slot and is connected to at least one pneumatic cylinder, or an electrical or any other mechanism, located on top of the plate itself. As a result of the action of this cylinder, the latch slides along a guide piece towards the edge or the center of the plate, depending on the desired status of the plate, either rotating or locked when the latch runs into the stops fitted on the plate's base and under it.

As additional components of the transversal bar, at least two shock absorbers have been fitted onto the sides of the axis, they are joined to the bar holder at one end, and to the plate's base at the other. The purpose of these shock absorbers is to absorb the weight of the hitch, making it easier to hitch and unhitch it.

Alternatively, the plate can consist of three circular parts of variable thickness; the bottom one is fixed to the base and does not move, whereas the top one is linked to the bar holder by means of an important rotational axis that allows the bar or arm to swing, thus allowing the radial rotation of this top part when the electromagnetic break is not activated. Between the aforementioned top and bottom parts, there is an intermediate part, also circular, linked to the top one by means of its multiple pitons, which are inserted in the corresponding holes drilled in this intermediate floating part. When the electromagnetic brake is activated, the intermediate floating part is anchored on to the bottom part, the braking or anchoring power being determined by the electrical intensity sent to the plate from the unit's cab, where the corresponding control is situated.

Once the intermediate part is held against the bottom one, the top one, which has the arm attached to it, also becomes immobilized by means of the aforementioned pitons that link the top and floating intermediate parts.

On the edge of the top part there is a safety component that, when activated with a pneumatic control, allows a latch to come out and stop the rotation of the plate as it runs into the corresponding stops.

In this optimal assembly of the device being described, the bar that has the arm also has an important threaded section in its center. This section, housed in the bar holder, will make it easier to control the bringing together of the arm's hitch to the semi-trailer axis.

For easier handling of the arm, a compression spring is located on the top part of the plate, on which the bar that has the arm rests.

The safety device for articulated semi-trailers being put forward has the essential advantage of the simplicity of its mechanism, which prevents the semi-trailer from going out of control and folding against the towing vehicle, a movement commonly known as "jackknifing".

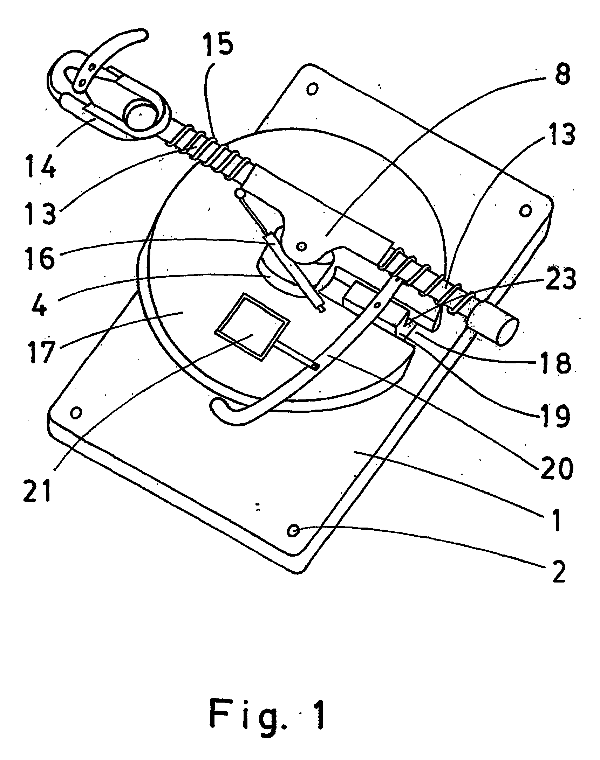

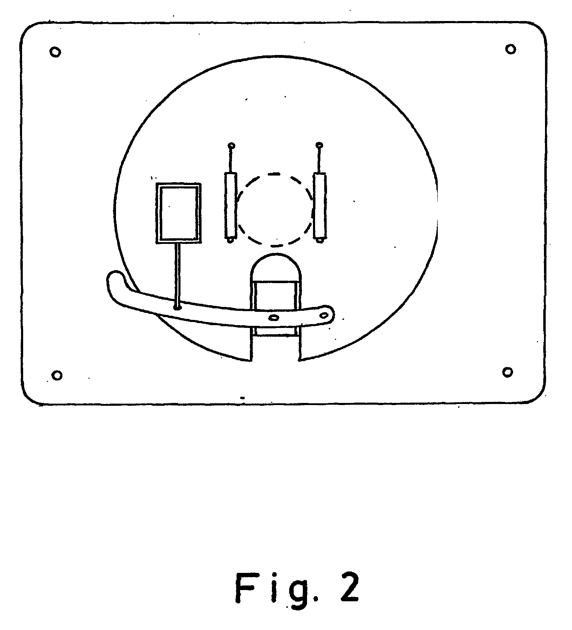

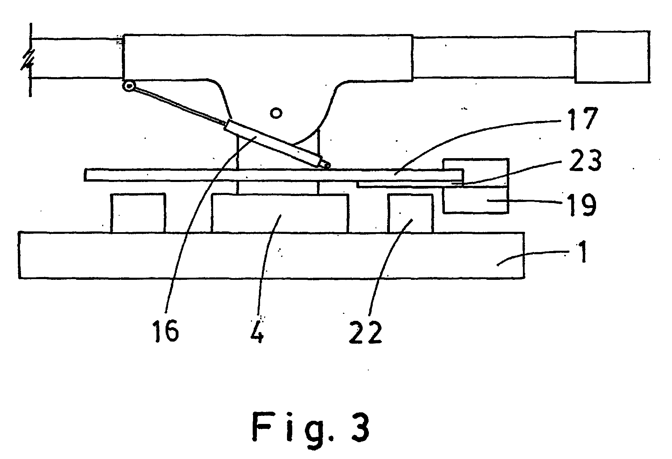

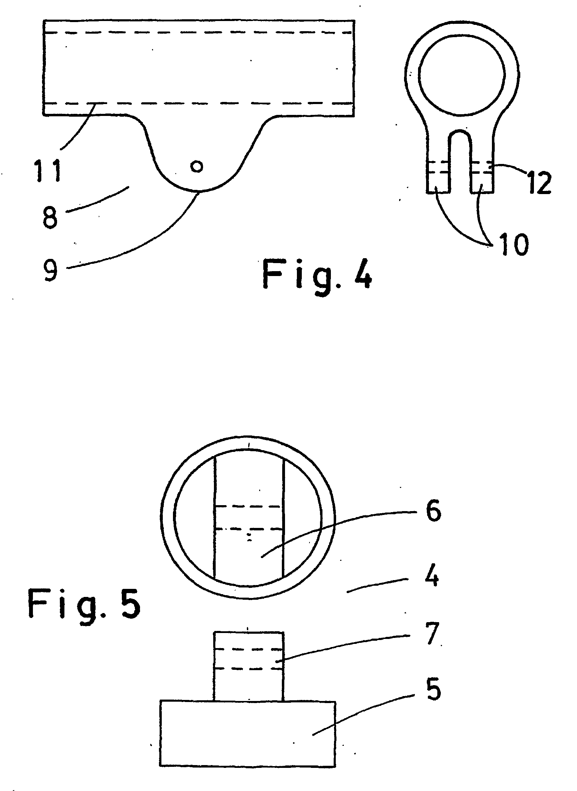

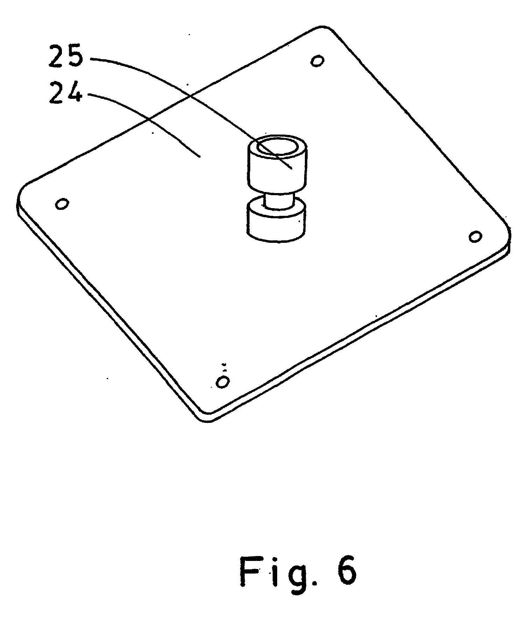

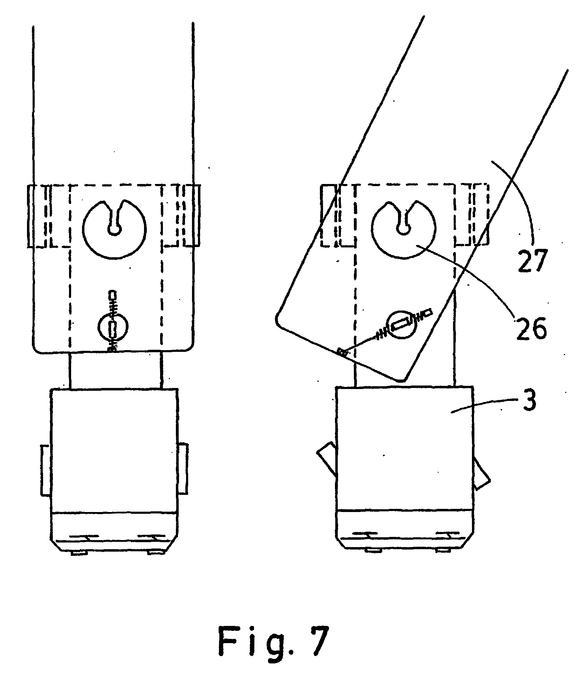

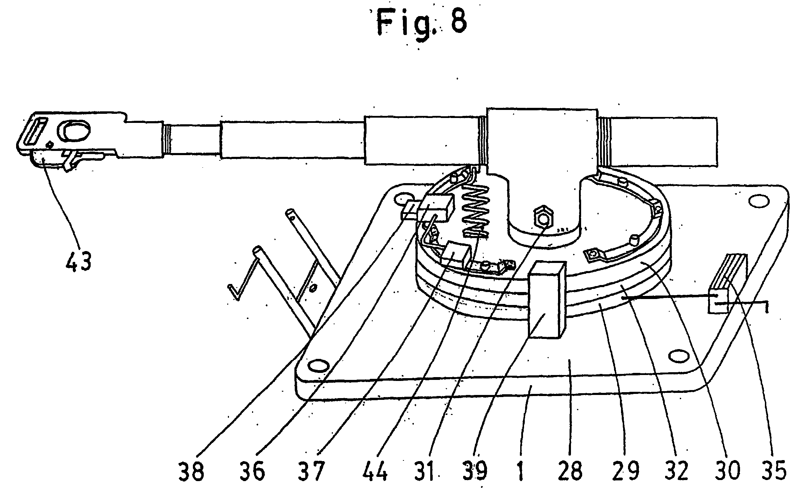

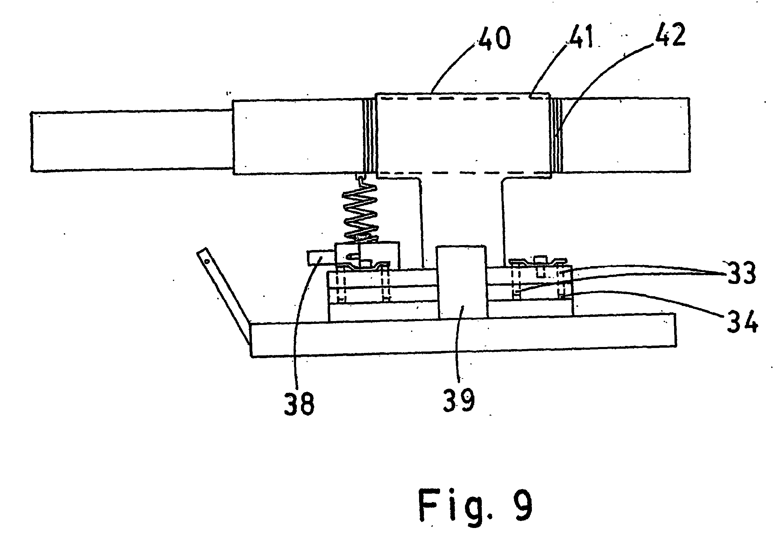

To better understand this invention, the optimal assembly is represented in the annexed plan. In this plan:
Figure -1- shows a top view in perspective of the invention.
Figure -2- shows a plan view where the bar and its associated arm have been omitted to make the drawing more clear.
Figure -3- shows a front view of the device, with the safety latch towards the edge of the plate.
Figure -4- shows the intermediate part where the bars are housed.
Figure -5- shows the supporting part onto which the bar holder is fixed.
Figure -6- shows the plaque that has the anchoring axis that will be inserted into the device's hitch.
Figure -7- shows a plan view of the towing vehicle and semi-trailer, both aligned and not aligned.
Figure -8- shows a view in perspective of an alternative assembly of the device.
Figure -9- shows a front view of the alternative assembly of the device.

The safety device for articulated semi-trailers being put forward includes, as can be seen from the figures mentioned above, a platform (1) provided with the corresponding holes (2) through which the device will be anchored onto the towing vehicle's (3) chassis crossbars. Towards the center of the platform (1) there is an axis (4) made up of a cylindrical body (5) and a rectangular flat sector (6) with a perforation (7). On the aforementioned rotating axis (4) rests a bar holder (8) with a circular sector (9) formed by two parallel pins (10) that come out of the cylindrical hollow section (11) and that are provided with the holes (12) that will house the fixing means.

A bar (13) of variable length crosses the bar holder (8) and ends at a hitching component (14) located at the end of the last telescopic section of the arm or bar (13). Both ends of the bar have shock absorbers (15) made up of a compression spring.

To make it easier to handle the arm that has the hitch, there are two buffers (16), placed at both sides of the axis (4) and stretching from the bar holder (8) to the circular plate (17) of variable thickness. A slot (18) runs from the edge of the plate to its center, and a latch (19) slides along it. The latch is connected to the lever (20) that is activated manually; by a pneumatic cylinder (21); electrically or by any other system. When the latch (19) rests inside of the plate (17) while it is rotating, it runs into the stops (22) located on the platform (1); whereas if the aforementioned latch (19) is situated outside the plate (17) by means of the plate's guide pieces (23), the plate can rotate fully.

As an additional component of the device being presented, there is a platform (24) that is anchored towards the front end of the semi-trailer, in such a way that its axis (25) faces the hitch (14) placed on the telescopic end of the arm (13).

As can be appreciated in figure -7-, the described device is placed on the towing vehicle's (3) chassis, in front of the fifth wheel (26), thus controlling the possible rotation of the semi-trailer (27) in relation to the towing vehicle.

Alternatively, the plate (17) can be replaced by another type of plate (28), made up of three circular parts of variable thickness. The bottom part (29) is anchored onto the platform (1) and cannot move, whereas the top part (30) is joined to the bar holder (8) by means of a rotating point (31). Between the aforementioned top (30) and bottom (29) parts, there is an intermediate part (32), also circular, associated to the top one (30) by means of the top part's multiple pitons (33). These cylindrical pitons (33) are lodged inside the corresponding holes (34) of the said intermediate part (32), which floats between the top and the bottom ones until it is locked by the electromagnetic device (35) activated from the towing vehicle's cab (3).

On the edge of the top part (30) there is a safety device (36) that, when activated manually, with the pneumatic or similar control (37), causes a latch (38) to project and limit the plate's (28) rotation, as due to it hitting the stops (39) anchored onto the platform (1).

In this alternative assembly the bar holder (40) has a central threaded hole (41), whilst the bar (42) has a threaded central section.

In order to make it easier to handle the hitch (43), a shock absorber (44) has been fitted that can consist of a cylindrical spring.

Now that the nature of this invention and the optimal way to manufacture it have been sufficiently described, it only remains to be said that such description is not restrictive, and it is possible to introduce changes, as long as they do not change the characteristics claimed hereunder.

## Claims

1. Safety device for articulated semi-trailers, such as those that are installed in industrial vehicles between a towing vehicle (3) and a semi-trailer (27) in order to prevent jackknifing of the semi-trailer with the towing vehicle, comprising:
- a platform (1) fixed to the chassis of the towing vehicle (3);
- a bar (13) of variable length connected to the platform (1);
- a hitch (14) fixed to one end of the bar (13);
**characterized in that** the device further comprises:
- a part (4) rotatably mounted on the platform (1) consisting of a cylindrical body (5) and a flat rectangular section (6) with a hole (7), with a circular plate (17; 28) of variable thickness, concentric to the cylindrical body (5);
- a bar holder (8) having a hollow cylindrical section (11) and two parallel wings forming a half-circular sector, the wings comprising holes to house fixing means which interact with the hole (7) of part (4) in order to connect the bar holder to the part (4), the bar (13) being fixed into section (11) of the bar holder (8);
- a connecting piece (24,25) fixed under the front of the semi-trailer (27), whereby in operation the hitch (14) is attached to the connecting piece (24,25).

2. Safety device for articulated semi-trailers as described in the previous claim, **characterized in that** the device further comprises two shock absorbing springs (15), mounted between each end of the bar (13) and the bar holder (8).

3. Safety device for articulated semi-trailers as described in the previous claims, **characterized in that** the device further comprises two shock absorbers (16) fitted at both sides of the part (4), connecting the bar holder (8) to the circular plate (17).

4. Safety device for articulated semi-trailers as described in the previous claims, comprising a latch (19) that is able to slide in and out the plate (17) along a slot (18) from the edge to the centre of the plate (17), the latch being attached to the lever (20) that can be activated manually or by means of a pneumatic cylinder (21).

5. Safety device for articulated semi-trailers as described in the previous claims, **characterized in that** when the latch (19) rests inside of the plate (17) whilst it is rotating, the latch runs into stops (22) anchored onto the platform (1), blocking the rotating movement of the plate (17) and also ,by the agency of the bar (13) and the connecting piece (24,25), limiting the movement of the frontal part of the semi-trailer, whereas when the said latch (19) is placed outside the plate (17,) through the plate's guide pieces (23), the plate can rotate freely.

6. Safety device for articulated semi-trailers as described in the previous claims, **characterized in that**, the plate (28) is made up of three circular parts of variable thickness (29,30,32), **characterized in that** the bottom part (29) is fixed to the platform (1), the top part (30) is joined to the bar holder (8) by means of the rotational point (31), and the intermediate part (32) is attached to the top one (30) by means of multiple circular pitons (33), which are lodged inside the intermediate part's holes (34).

7. Safety device for articulated semi-trailers as described in the previous claims, **characterized in that** the intermediate part (32) are usually floating between the top and the bottom ones, and then the top part of the plate can rotate freely, and therefore the frontal part of the semi-trailer (27) also can do it, whereas the intermediate part (32) can be held at will against the bottom part with the help of an electromagnetic device (35) controlled from the towing vehicle's (3) cab, limiting the movement of the frontal part of the semi-trailer (27).

8. Safety device for articulated semi-trailers as described in the previous claims, **characterized by** a complementary safety component (36) fitted on the edge of the top part (30), which can be activated manually pneumatically or electrically, allowing the latch (38) to project outwards and limit the rotation of the plate (28), as it runs into the stops (39) anchored onto the platform (1), also limiting the movement of the frontal part of the semi-trailer (27).

9. Safety device for articulated semi-trailers as described in the previous claims, **characterized in that** the bar holder (40) has a central threaded hole (41), whilst the bar (42) has a central threaded section, in order to provide an easy length change.

10. Safety device for articulated semi-trailers as described in the previous claims, **characterized by** a shock absorber (44), usually a cylindrical spring, that makes it easier and safer to handle the hitch (43).

## Patentansprüche

1. Sicherheitsvorrichtung für einen Sattelzug, insbesondere für eine solche, die bei Industriefahrzeugen zwischen einem Zugfahrzeug (3) und einem Sattelauflieger (27) installiert ist, um ein Zusammenfalten des Sattelaufliegers mit dem Zugfahrzeug zu vermeiden, welche folgendes aufweist:
Eine Plattform (1), die an dem Chassis des Zugfahrzeugs (3) befestigt ist;
eine Stange (13) von variabler Länge, die mit der Plattform (1) verbunden ist;
einen Zughaken (14), der an einem Ende der Stange (13) befestigt ist;
**dadurch gekennzeichnet, dass** die Vorrichtung ferner folgendes aufweist:
Ein Teil (4), das an der Plattform (1) drehbar montiert ist, welches aus einem zylindrischen Körper (5) und einem flachen rechteckigen Abschnitt (6) mit einer Öffnung (7) besteht, einer kreisförmigen Platte (17; 28) von variabler Dicke, die konzentrisch zu dem zylindrischen Körper (5) ist;
einen Stangenhalter (8) mit einem hohlzylindrischen Abschnitt (11) und zwei parallelen Flügeln, die einen halbkreisförmigen Abschnitt formen, wobei die Flügelöffnungen aufweisen, um Fixiereinrichtungen darin aufzunehmen, die mit der Öffnung (7) des Teils (4) zusammenwirken, um den Stangenhalter mit dem Teil (4) zu verbinden, wobei die Stange (13) in den Abschnitt (11) des Stangenhalters (8) gehalten ist;
ein Verbindungsteil (24, 25), welches unter dem Vorderteil des Sattelaufliegers (27) befestigt ist, wodurch im Betrieb der Zughaken (14) an dem Verbindungsteil (24, 25) angebracht ist.

2. Sicherheitsvorrichtung für einen Sattelzug, wie in dem voranstehenden Patentanspruch beschrieben, **dadurch gekennzeichnet, dass** die Vorrichtung ferner zwei Schockabsorber-Federn (15) aufweist, die zwischen jedem Ende der Stange (13) und dem Stangenhalter (8) montiert sind.

3. Sicherheitsvorrichtung für einen Sattelzug, wie in den voranstehenden Patentansprüchen beschrieben, **dadurch gekennzeichnet, dass** die Vorrichtung ferner zwei Schockabsorber (16) aufweist, die an beiden Seiten des Teils (4) aufgesetzt sind, wobei sie den Stangenhalter (8) mit der kreisförmigen Platte (17) verbinden.

4. Sicherheitsvorrichtung für einen Sattelzug, wie in den voranstehenden Patentansprüchen beschrieben, welche einen Fallriegel (19) aufweist, der in der Lage ist in die und aus der Platte (17) entlang eines Schlitzes (18) von der Kante bis zum Zentrum der Platte (17) zu gleiten, wobei der Fallriegel an dem Hebel (20) befestigt ist, der manuell oder durch einen Pneumatikzylinder (21) betätigbar ist.

5. Sicherheitsvorrichtung für einen Sattelzug, wie in einem der voranstehenden Patentansprüche beschrieben, **dadurch gekennzeichnet, dass** wenn der Fallriegel (19) in der Platte (17) rastet, während sie sich dreht, der Fallriegel in Anschläge (22) läuft, die an der Plattform (1) verankert sind, wodurch die Drehbewegung der Platte (17) blockiert wird und wobei auch durch die Tätigkeit der Stange (13) und des Verbindungsstücks (24, 25) die Drehbewegung des Vorderteils des Sattelaufliegers begrenzt wird, wodurch, wenn der Fallriegel (19) außerhalb der Platte (17) platziert ist, durch die Führungsstücke (23) der Platte, die Platte frei rotieren kann.

6. Sicherheitsvorrichtung für einen Sattelzug, wie in den voranstehenden Patentansprüchen beschrieben, **dadurch gekennzeichnet, dass** die Platte (28) aus drei kreisrunden Teilen von variabler Dicke (29, 30,32) hergestellt ist, **dadurch gekennzeichnet, dass** das untere Teil (29) an der Plattform (1) fixiert ist, das obere Teil (30) mit dem Stangenhalter (8) durch den Drehpunkt (31) verbunden ist, und das mittlere Teil (32) an das obere Teil (30) durch mehrere kreisrunde Nägel (33) befestigt ist, die in Öffnungen (34) innerhalb des mittleren Teils aufgenommen sind.

7. Sicherheitsvorrichtung für einen Sattelzug, wie in den voranstehenden Patentansprüchen beschrieben, **dadurch gekennzeichnet, dass** das mittlere Teil (32) gewöhnlich zwischen dem oberen Teil und dem unteren Teil schwimmt und dann das obere Teil der Platte frei rotieren kann und daher das Vorderteil des Sattelaufliegers (27) dieses auch tun kann, wodurch das Mittelteil (32) beliebig gegen den unteren Teil mit der Hilfe einer elektromagnetischen Vorrichtung (35) gehalten werden kann, die von dem Zugfahrzeug- (3) Fahrerhaus, geregelt werden kann, wodurch die Bewegungen des Vorderteils des Sattelaufliegers (27) begrenzt wird.

8. Sicherheitsvorrichtung für einen Sattelzug, wie in den voranstehenden Patentansprüchen beschrieben, **dadurch gekennzeichnet, dass** eine komplementäre Sicherheitskomponente (36) vorgesehen ist, die an der Kante des Oberteils (30) aufgesetzt ist, die pneumatisch oder elektrisch aktiviert werden kann, wodurch sie dem Fallriegel (38) erlaubt, nach außen hervor zu stehen und die Drehung der Platte (28) zu begrenzen, wenn sie in die Anschläge (39) läuft, die auf der Plattform (1) verankert sind, wodurch auch die Bewegungen des Vorderteils des Sattelaufliegers (47) begrenzt wird.

9. Sicherheitsvorrichtung für einen Sattelzug, wie in den voranstehenden Patentansprüchen beschrieben, **dadurch gekennzeichnet, dass** der Stangenhalter (40) eine zentrale Gewindeöffnung (41) aufweist, während die Stange (42) einen zentralen Gewindeabschnitt aufweist, um eine leichte Längenänderung zu ermöglichen.

10. Sicherheitsvorrichtung für einen Sattelzug, wie in den voranstehenden Patentansprüchen beschrieben, **dadurch gekennzeichnet, dass** ein Schockabsorber (44) vorgesehen ist, der gewöhnlich eine zylindrische Feder ist, die es erleichtert und sicherer macht, den Zughaken (43) zu handhaben.

## Revendications

1. Dispositif de sécurité pour semi-remorque articulé tel que ceux installés sur des véhicules industriels entre un véhicule tracteur (3) et un semi-remorque (27) afin d'empêcher la mise en portefeuille du semi-remorque avec le véhicule tracteur, comprenant :
- une plateforme (1) fixée au châssis du véhicule tracteur (3) ;
- une barre (13) de longueur variable reliée à la plateforme (1) ;
- un attelage (14) fixé à une extrémité de la barre (13) ;
**caractérisé en ce que** le dispositif comprend également :
- une pièce (4) montée de façon à pouvoir être mise en rotation sur la plateforme (1) comprenant un corps cylindrique (5) et une section rectangulaire plate (6) avec un trou (7), avec un plateau circulaire (17 ; 28) d'épaisseur variable, concentrique au corps cylindrique (5) ;
- un support de barre (8) de section creuse cylindrique (11) et deux ailes parallèles formant un espace semi-circulaire, les ailes comprenant des trous pour recevoir les moyens de fixation qui interagissent avec le trou (7) de la pièce (4) afin de relier le support de barre et la pièce (4), la barre (13) étant fixée dans la section (11) du support de barre (8) ;
- une pièce de connexion (24, 25) fixée sous l'avant du semi-remorque (27), dans lequel, en cours de fonctionnement, l'attelage (14) est attaché à la pièce de connexion (24, 25).

2. Un dispositif de sécurité pour semi-remorque articulé selon la revendication précédente, **caractérisé en ce que** le dispositif comprend également deux ressorts anti-choc (15) montés entre chaque extrémité de la barre (13) et le support de barre (8).

3. Un dispositif de sécurité pour semi-remorque articulé selon les revendications précédentes, **caractérisé en ce que** le dispositif comprend également deux amortisseurs (16) fixés sur chaque côté de la pièce (4) reliant le support de barre (8) au plateau circulaire (17).

4. Un dispositif de sécurité pour semi-remorque articulé selon les revendications précédentes, comprenant une attache (19) pouvant coulisser dans et hors du plateau (17) le long d'une rainure (18) allant de l'arête au centre du plateau (17), l'attache étant fixée au levier (20) pouvant être actionné manuellement ou par le biais d'un cylindre pneumatique (21).

5. Un dispositif de sécurité pour semi-remorque articulé selon les revendications précédentes, **caractérisé en ce que**, lorsque l'attache (19) reste à l'intérieur du plateau (17) alors qu'il est en rotation, l'attache entre dans les taquets (22) se trouvant sur la plateforme (1) bloquant ainsi le mouvement de rotation du plateau (17), et de plus, étant donné le placement de la barre (13) et de la pièce de connexion (24, 25) limitant le mouvement de la partie avant du semi-remorque, alors que lorsque l'attache précitée (19) est placée hors du plateau (17), les pièces de guidage du plateau (23) permettent au plateau de poursuivre son mouvement de rotation librement.

6. Un dispositif de sécurité pour semi-remorque articulé selon les revendications précédentes, **caractérisé en ce que** le plateau (28) est fait de trois parties circulaires d'épaisseur variable (29, 30, 32), **caractérisées en ce que** la partie inférieure (29) est fixée à la plateforme (1), la partie supérieure (30) rejoint le support de barre (8) grâce au point de rotation (31), et la partie intermédiaire (32) est attachée à la partie supérieure (30) grâce à de multiples pitons circulaires (33) qui se trouvent à l'intérieur des trous (34) de la partie intermédiaire.

7. Un dispositif de sécurité pour semi-remorque articulé selon les revendications précédentes, **caractérisé en ce que** la partie intermédiaire (32) flotte habituellement entre les parties supérieure et inférieure, et la partie supérieure du plateau peut être librement en rotation, et c'est pourquoi la partie avant du semi-remorque (27) peut également le faire, alors que la partie intermédiaire (32) peut être maintenue à volonté contre la partie inférieure grâce à un dispositif électromagnétique (35) contrôlé depuis la cabine du véhicule tracteur (3), limitant le mouvement de la partie avant du semi-remorque (27).

8. Un dispositif de sécurité pour semi-remorque articulé selon les revendications précédentes, **caractérisé en ce qu'**il comprend un élément complémentaire de sécurité (36) se trouvant sur l'arête de la partie supérieure (30) et qui peut être actionné manuellement, par pneumatique ou électriquement, permettant à l'attache (38) de se projeter vers l'extérieur et de limiter la rotation du plateau (28) puisqu'il entre dans les taquets (39) se trouvant sur la plateforme (1) limitant également le mouvement de la partie avant du semi-remorque (27).

9. Un dispositif de sécurité pour semi-remorque selon les revendications précédentes, **caractérisé en ce que** le support de barre (40) comprend un trou central taraudé (41) alors que la barre (42) comprend une section centrale taraudée afin de permettre un changement de longueur aisé.

10. Un dispositif de sécurité pour semi-remorque articulé selon les revendications précédentes, **caractérisé en ce qu'**il comprend un amortisseur (44), habituellement un ressort cylindrique qui facilite et sécurise la manipulation de l'attelage (43).
